# FASCICULE DE BREVET EUROPEEN

(11) **EP 3 389 983 B1**
(45) Date de publication et mention de la délivrance du brevet: **05.05.2021**
(21) Numéro de dépôt: 16823212.2
(22) Date de dépôt: 16.12.2016
(51) Int. Cl.: B29C 48/51, B29C 48/85, B29C 48/54, B29C 48/25, B33Y 10/00, B22F 3/00, B29C 45/60, B29C 48/515

(54) **VIS D'ENTRAÎNEMENT DE MATIÈRE ET PROCÉDÉ DE FABRICATION**
MATERIALFÖRDERSCHNECKE UND VERFAHREN ZU DEREN HERSTELLUNG
MATERIAL CONVEYING SCREW AND METHOD FOR PRODUCING SAME

(30) Priorité: 18.12.2015 FR 1562811
(43) Date de publication de la demande: 24.10.2018
(73) Titulaire: Compagnie Générale des Etablissements Michelin, 63000 Clermont-Ferrand (FR)
(72) Inventeur: OUGIER, Christophe, 63040 Clermont-Ferrand Cedex 09 (FR); LETOCART, Arnaud, 63040 Clermont-Ferrand Cedex 09 (FR)
(74) Mandataire: Roussy, Delphine
(86) Numéro de dépôt international: PCT/EP2016/081372
(87) Numéro de publication internationale: WO 2017/103061

(56) Documents cités:
- EP-A1- 0 808 705
- EP-A1- 2 952 275
- DE-A1- 1 751 961
- DE-A1- 10 013 474
- DE-A1-102011 014 474
- JP-A- S5 316 076
- JP-U- H0 452 026
- NL-A- 7 503 491

## Description

La présente invention concerne le domaine des vis pour l'entraînement de matières, utilisées notamment dans des machines d'extrusion ou d'injection et généralement montées dans des cylindres.

Notamment lorsque les matières à entraîner sont des mélanges vulcanisants à base d'élastomères, il existe un besoin de réguler la température des vis, pour éviter une augmentation de la température des mélanges due notamment aux effets de cisaillement des mélanges lors de la rotation des vis et une vulcanisation prématurée des mélanges.

Le brevet européen EP 2 688 725 décrit une vis dont le filet en hélice présente une rainure en hélice qui suit son profil et qui est ouverte vers l'extérieur. Une feuille de recouvrement allongée, enroulée en hélice, est soudée sur les bords de cette rainure, de façon à former un canal intérieur. Les extrémités de ce canal intérieur sont reliées à des canaux longitudinaux de l'arbre de la vis, en vue de faire circuler dans ce canal intérieur un liquide de refroidissement.

Une telle vis est en fait inadaptée pour être incluse dans une machine d'extrusion ou d'injection de mélanges vulcanisants à base d'élastomères, qui ne doivent pas vulcaniser lors de leur transport, par exemple pour la fabrication de pneumatiques. De plus, il existe un risque que le liquide de refroidissement ou de régulation de température se mélange avec la matière en cas de défaillance des soudures de la feuille de recouvrement. En outre, la fabrication d'une telle vis nécessite plusieurs opérations délicates, ce qui augmente le coût et le risque de défaillance.

Le brevet JP H04 52026 décrit une vis comprenant un corps longitudinal et un filet en hélice rapporté sur ce corps, ce filet comprenant deux parties en hélices accolées l'une à l'autre et entre lesquelles s'étend une résistance électrique en hélice. Le document EP 2 952 275 décrit un procédé d'obtention par fabrication additive d'une d'une vis comprenant un filet hélicoïdal équipé intérieurement d'un canal de refroidissement axial.

D'une manière générale, les vis d'extrusion pour le caoutchouc sont fortement sollicitées au niveau des sommets des filets, dues à l'alimentation par une bande froide qui crée des efforts radiaux entre la vis et le cylindre. Ceux-ci sont d'ailleurs souvent rechargés avec des matériaux résistant à l'usure (carbures dans une matrice Nickel ou Colbat). Dans les applications de type bi-vis, ce sont les efforts de cisaillement entre les vis qui génèrent un effort d'écartement qui plaque les sommets des filets contre le cylindre.

La présente invention a pour but d'améliorer la structure des vis notamment d'entraînement de matière, leurs usages et leurs modes de fabrication.

Selon un mode de réalisation, il est proposé une vis monobloc qui comprend un corps longitudinal et, autour de ce corps longitudinal, au moins un filet s'étendant sous la forme d'une hélice.

Le filet comprend, sur une partie de sa longueur, un cloisonnement intérieur délimitant une pluralité de canaux intérieurs qui s'étendent sous la forme d'hélices suivant la forme en hélice du filet.

La vis comprend des cavités collectrices dans lesquelles débouchent les extrémités desdits canaux intérieurs.

Lesdites cavités collectrices s'étendent radialement et débouchent dans un alésage longitudinal dudit corps en des endroits espacés longitudinalement.

Le filet peut comprendre une paroi extérieure définissant sa surface extérieure, le cloisonnement intérieur comprenant au moins une cloison intérieure s'étendant depuis cette paroi extérieure.

Le cloisonnement intérieur peut comprendre au moins une cloison s'étendant depuis ledit corps longitudinal.

Le cloisonnement intérieur peut comprendre une âme et une pluralité de cloisons intérieures qui rayonnent depuis cette âme, de façon à délimiter des canaux intérieurs situés autour de cette âme.

Le cloisonnement intérieur peut comprendre des cloisons intérieures présentant des épaisseurs égales.

Ladite paroi extérieure et ladite cloison intérieure peuvent présenter des épaisseurs égales.

Ledit corps peut être pourvu d'un alésage longitudinal dans lequel sont aménagées des cannelures.

Ledit corps peut comprendre un arbre de transmission des efforts

Il est également proposé un procédé de fabrication d'une vis, dans lequel cette vis est réalisée par fabrication additive par dépose et agglomération de couches de poudre successives perpendiculaires à l'axe d'une telle vis à fabriquer.

Il est également proposé un procédé de fabrication d'une vis, dans lequel cette vis est réalisée par fabrication additive par dépose et agglomération de couches de poudre successives et parallèles à l'axe d'une telle vis à fabriquer.

Il est également proposé un assemblage qui comprend une vis monobloc telle que définie plus haut et qui comprend en outre un arbre de montage et de transmission engagé dans l'alésage de la vis et solidaire de cette dernière et pourvu d'un alésage longitudinal.

La paroi de l'arbre de montage et de transmission peut présenter des orifices radiaux communiquant avec lesdites cavités de la vis.

Des vis et des assemblages incluant des vis vont maintenant être décrits à titre d'exemples non limitatifs, illustrés par le dessin annexé dans lequel :
- la figure 1 représente une coupe longitudinale d'une vis ;
- la figure 2 représente un assemblage incluant la vis de la figure 1 ;
- la figure 3 représente une coupe longitudinale d'une autre vis ;
- la figure 4 représente un assemblage incluant la vis de la figure 3 ; et
- la figure 5 représente un autre assemblage incluant la vis de la figure 1.

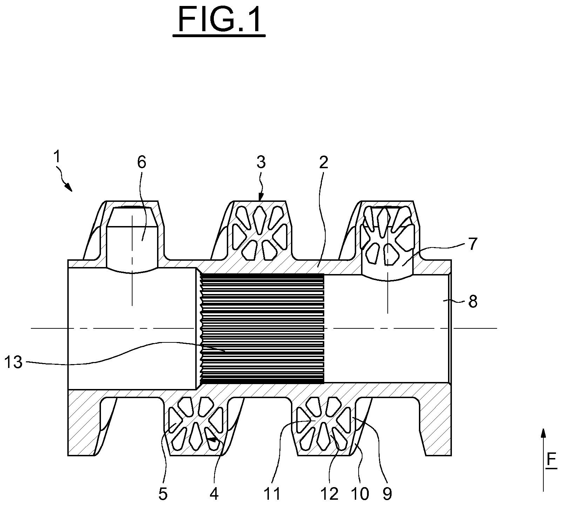

Comme illustré sur la figure 1, une vis monobloc 1 comprend un corps cylindrique longitudinal 2 et un filet extérieur 3 formé en hélice autour du corps cylindrique 2.

Selon l'exemple représenté, ce filet extérieur 3 présente un profil transversal substantiellement trapézoïdal, rectangulaire, trapézoïdal ou suivre une forme plus complexe telle qu'une développante de cercle à la manière des engrenages.

Le filet extérieur 3 comprend un cloisonnement intérieur 4 qui délimite une pluralité de canaux intérieurs 5 qui s'étendent sur une partie de la longueur du filet 3, sous la forme d'hélices qui suivent le profil en hélice du filet 3.

Le filet 3 est pourvu, à faibles distances de ses extrémités, de cavités collectrices intérieures radiales 6 et 7 dans lesquelles débouchent les extrémités correspondantes des canaux intérieurs 5 et qui sont alignées longitudinalement. Ces cavités collectrices 6 et 7 s'étendent vers l'intérieur au travers de la paroi du corps cylindrique 2 et débouchent dans l'alésage longitudinal 8 de ce corps 2, en des endroits espacés longitudinalement.

Le filet 3 comprend une paroi extérieure 9 qui définit sa surface extérieure 10.

Le cloisonnement intérieur 4 comprend une âme intérieure 11 et des cloisons intérieures 12 qui s'étendent sous la forme de rayons depuis cette âme 11 et dont certaines rejoignent la paroi extérieure 9 et les autres rejoignent le corps cylindrique 2. Ainsi, les canaux intérieurs 5 sont substantiellement répartis autour de l'âme 11.

Les parties de jonction des cloisons intérieures 12 avec la paroi extérieure 9 et le corps cylindrique 2 présentent des arrondis qui, vus de l'intérieur des canaux 5, sont concaves.

Avantageusement, la paroi extérieure 9 et les cloisons 12 peuvent présenter, entre leurs parties de jonction précitées, des épaisseurs substantiellement égales. En outre, la section cumulée des canaux intérieurs 5 est au moins égale à cinquante pour cent (50%) de la section totale du filet 3.

L'alésage longitudinal 8 du corps cylindrique 2 est pourvu de moyens permettant un entrainement circonférenciel, tel que des cannelures 13 qui s'étendent entre et à distance des cavités collectrices 6 et 7.

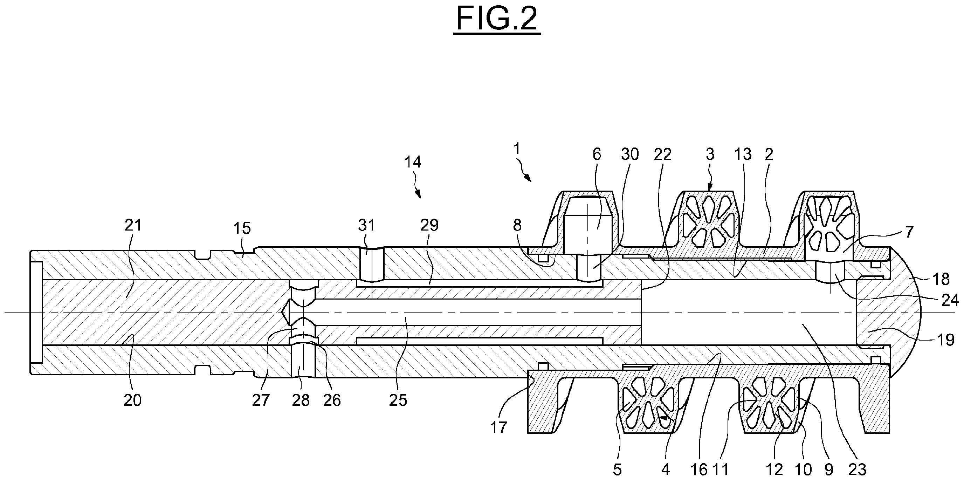

Sur la figure 2 est illustré un assemblage 14 qui comprend la vis 1.

Cet assemblage 14 comprend un arbre longitudinal cylindrique 15 de montage et de transmission des efforts qui est engagé dans l'alésage longitudinal 8 de la vis 1 et qui comprend des cannelures extérieures 16 en prise avec les cannelures intérieures 13 de la vis 1. Le corps cylindrique 2 de la vis 1 est, longitudinalement, pris entre un épaulement 17 de l'arbre 15 et la tête 18 d'une vis de montage 19 vissée longitudinalement sur une extrémité de l'arbre 15.

L'arbre longitudinal de montage 15 présente un alésage longitudinal cylindrique 20 dans lequel est installé, solidairement et de façon étanche, un arbre longitudinal de distribution 21.

L'arbre de distribution 21 présente une extrémité 22 placée entre les cavités collectrices 6 et 7 de la vis 1, de façon à aménager, au-delà de cette extrémité 22, un espace interne 23 dans l'alésage longitudinal 20 de l'arbre de montage 15. Cet espace 23 communique avec la cavité collectrice 7 de la vis 1 via un orifice radial 24 aménagé au travers de la paroi de l'arbre de montage 15.

L'arbre de distribution 21 est pourvu d'un canal longitudinal local 25 qui débouche dans l'espace interne 23 au travers de sa face radiale d'extrémité 22 et d'une gorge périphérique 26 qui communique avec le canal longitudinal 25 via un orifice radial 27. La paroi de l'arbre de montage 15 est pourvue d'un orifice radial traversant de communication extérieure 28 qui débouche dans la gorge 26 et qui est situé à un endroit éloigné de la vis 1.

L'arbre de distribution 21 est pourvu d'une rainure périphérique 29 qui communique avec la cavité collectrice 6 de la vis 1 via un orifice radial 30 aménagé au travers de la paroi de l'arbre de montage 15. La paroi de l'arbre de montage 15 est pourvue d'un orifice radial traversant de communication extérieure 31 qui débouche dans la gorge 28 et qui est situé à un endroit éloigné de la vis 1.

Il résulte de l'assemblage ci-dessus qu'en reliant l'orifice radial de communication extérieure 28 à une source d'un fluide par exemple un liquide, et l'orifice radial de communication extérieure 31 à une évacuation, ou réciproquement, on peut faire circuler ce fluide dans les canaux intérieurs 5 du filet 3 de la vis 1, entre les cavités collectrices 6 et 7. Ainsi, le fluide, qui circule en parallèle dans les canaux intérieurs 5, peut constituer un moyen de régulation de la température de la vis 1, plus particulièrement du filet 3.

L'assemblage 15 peut former un moyen d'entraînement ou de déplacement d'une matière, par exemple liquide ou en poudre ou en grains, dans un cylindre d'une machine, non représentée, par exemple d'extrusion ou d'injection, l'arbre de montage 15 étant relié à un moteur d'entraînement en rotation et la vis 1 constituant un moyen pour déplacer une matière dans une chambre du cylindre, ce cylindre étant pourvu de moyens de connexion des orifices radiaux de communication extérieure 28 et 31. Par exemple, cette matière peut être un mélange vulcanisant à base d'élastomères pour la fabrication de pneumatiques.

Il résulte de ce qui précède que le cloisonnement 4, non seulement délimite les canaux intérieurs parallèles 5, qui peuvent être répartis sur toute la section du filet 3, mais constitue en outre une structure de soutien et de renforcement de la paroi extérieure 9 du filet 3, de telle sorte que le filet 3, plus particulièrement sa paroi extérieure 9, est apte à supporter des charges élevées, tout en assurant une régulation de la température de la vis sous l'effet du fluide circulant dans les canaux intérieurs 5, au regard de la température de la matière déplacée.

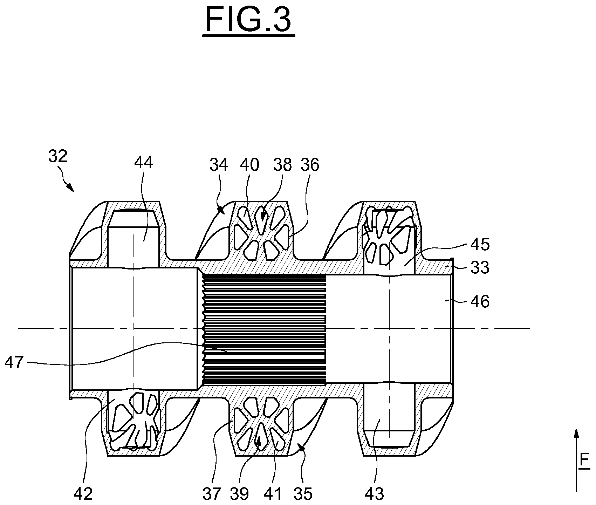

Sur la figure 3 est illustrée une vis monobloc 32 qui comprend un corps cylindrique longitudinal 33 et deux filets extérieurs parallèles 34 et 35 en hélice autour du corps cylindrique 33.

Ces filets extérieurs parallèles 34 et 35 sont respectivement construits de façon équivalente au filet 3 de la vis 1 décrite en référence à la figure 1.

Ces filets 34 et 35 comprennent respectivement des parois extérieures 36 et 37, des cloisonnements intérieurs 38 et 39 délimitant des pluralités de canaux intérieurs 40 et 41 en hélices, des cavités radiales collectrices 42 et 43 dans lesquelles débouchent des extrémités des canaux intérieurs 40 du filet 34 et des cavités radiales collectrices 44 et 45 dans lesquelles débouchent des extrémités des canaux intérieurs 41 du filet 35. Les cavités collectrices 42 et 44 et les cavités collectrices 43 et 45 sont, respectivement, diamétralement opposées. Les cavités collectrices 42 et 43 et les cavités collectrices 44 et 45 sont, respectivement, alignées longitudinalement.

L'alésage longitudinal 46 du corps cylindrique 33 est pourvu de cannelures intérieures 47.

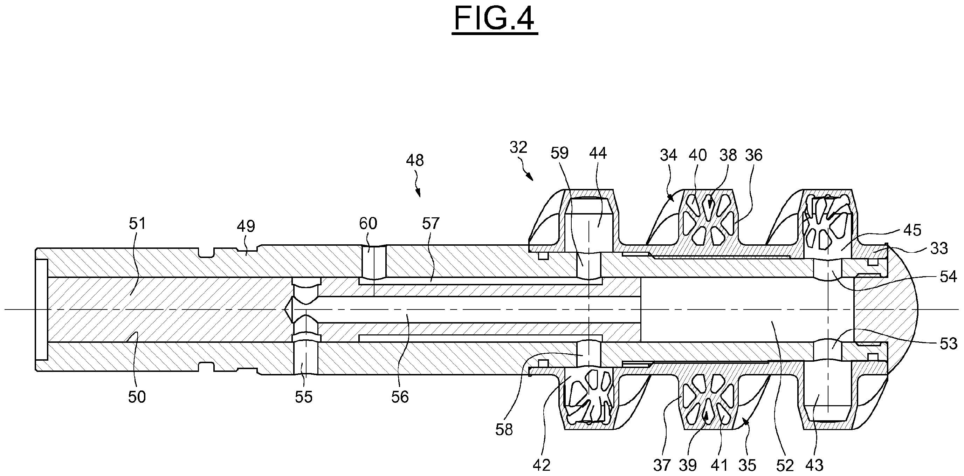

Sur la figure 4 est illustré un assemblage 48 qui comprend la vis 32, équivalent à l'assemblage 14 décrit en référence à la figure 2 et permettant une circulation d'un fluide de régulation de température, en parallèle dans les canaux intérieurs 40 et 41 des filets 34 et 35.

Cet assemblage 48 comprend un arbre longitudinal de montage 49 sur lequel la vis 32 est montée et un arbre longitudinal de distribution 50 monté dans l'alésage longitudinal 51 de l'arbre de montage 49, agencés comme les arbres 15 et 21 pour une telle circulation en parallèle.

Les cavités collectrices 43 et 45 des filets 34 et 35 communiquent avec un espace interne 52 de l'arbre de montage 49, via des orifices traversants 53 et 54 de l'arbre de montage 49. L'espace interne 52 communique avec un orifice radial de communication extérieure 55 de l'arbre de montage 49 via un canal local longitudinal 56 de l'arbre de distribution 51.

Les cavités collectrices 42 et 44 des filets 34 et 35 communiquent avec une rainure périphérique 57 de l'arbre de distribution via des orifices traversants 58 et 59 de l'arbre de montage 49. L'arbre de montage 49 est pourvu d'un orifice traversant de communication extérieure 60 débouchant dans la rainure périphérique 57.

Comme décrit précédemment, en reliant les orifices de communication extérieure 55 et 60, respectivement à une source de fluide et à une évacuation, on peut faire circuler, en parallèle, ce fluide respectivement dans les canaux intérieurs 40 et 41 des filets parallèles 34 et 35 de la vis 32.

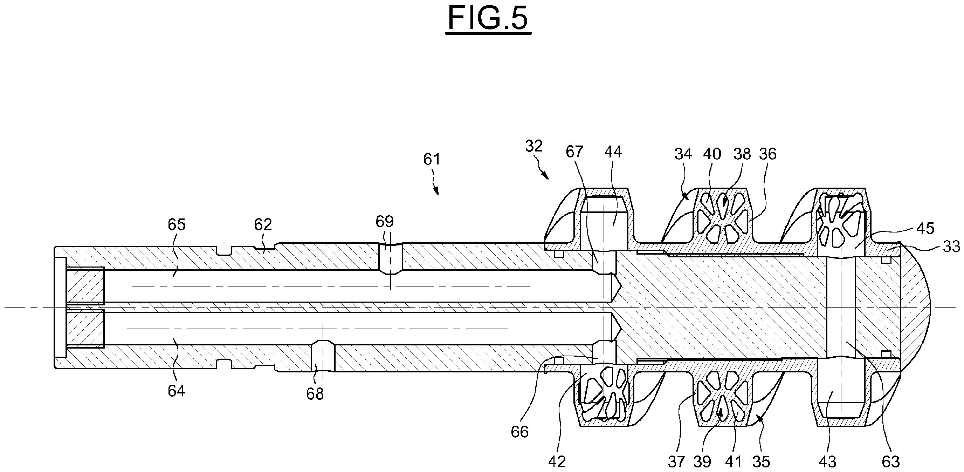

Sur la figure 5 est illustré un assemblage 61, permettant de monter en série la pluralité de canaux 40 du filet 34 et la pluralité de canaux 41 du filet 35 de la vis 32, en aller et retour en hélices.

L'assemblage 61 comprend un arbre longitudinal de montage 62 qui porte la vis 32.

L'arbre de montage 62 est pourvu d'un orifice radial intermédiaire 63 qui met en communication la cavité collectrice 43 du filet 34 avec la cavité collectrice 45 du filet 35, en des endroits diamétralement opposés.

L'arbre de montage 62 est pourvu de deux canaux longitudinaux locaux 64 et 65 qui communiquent respectivement avec la cavité collectrice 42 du filet 34 et avec la cavité collectrice 44 du filet 35, via des orifices radiaux 66 et 67 de cet arbre 62, en des endroits diamétralement opposés.

L'arbre de montage 62 est pourvu des deux orifices radiaux de communication extérieure 68 et 69 débouchant dans les canaux longitudinaux 64 et 65.

En reliant les orifices de communication extérieure 68 et 69, respectivement à une source de fluide et à une évacuation, on peut faire circuler, en série depuis leurs cavités collectrices correspondantes et jusqu'à leurs cavités collectrices correspondantes, ce fluide dans les pluralités de canaux intérieurs 40 et 41 des filets 34 et 35 de la vis 32, via l'orifice intermédiaire 63.

Les vis monoblocs 1 et 32, illustrées sur les figures 1 et 3, peuvent être réalisées selon un procédé de fabrication additive à base de poudre, comprenant une pluralité d'étapes successives de dépose de couches de poudre et d'agglomération de ces couches de poudre selon des motifs prédéterminés à l'aide d'un faisceau énergétique à rayonnement électromagnétique, comme par exemple un faisceau laser, et/ou d'un faisceau de particules, comme par exemple un faisceau d'électrons.

Il est souhaitable que la forme des canaux précités internes aux filets des vis monoblocs 1 et 32 soit adaptée au sens de fabrication de manière à éviter le risque d'affaissement de la matière pendant le processus de fabrication en couches successives.

Selon une variante de réalisation, le procédé de fabrication peut comprendre la réalisation de couches successives, selon des motifs correspondant à des sections successives perpendiculaires à l'axe des vis à obtenir.

Selon une autre variante de réalisation, le procédé de fabrication peut comprendre la réalisation de couches successives, selon des motifs correspondant à des sections successives parallèles à l'axe des vis à obtenir, ces couches étant par exemple empilées perpendiculairement à des directions radiales F indiquées sur les figures 1 et 3, ces directions radiales F étant par exemple parallèles aux axes des cavités collectrices internes précitées des vis.

Les vis monoblocs 1 et 32 présentant généralement une longueur axiale supérieure à leur diamètre extérieur, une telle fabrication par couches successives parallèles à leur axe est avantageuse car le nombre de couches à réaliser est réduit par rapport une fabrication par couches successives perpendiculaires à leur axe. On obtient ainsi une réduction de la durée et du coût de fabrication.

Pour cela, le procédé débute par une étape de dépose d'une première couche de poudre sur une surface de travail d'un plateau de fabrication. Ensuite, une source énergétique, par exemple du type laser, émet un faisceau énergétique afin de chauffer la couche de poudre selon un motif comprenant des régions locales initiales, alignées axialement, d'extrémité radiale du ou des filets des vis à obtenir et ainsi réaliser de manière sélective la fusion et l'agglomération de la poudre sur ces régions.

Puis, on réalise les couches successives correspondant aux sections successives parallèles à l'axe des vis à obtenir, jusqu'à la réalisation de régions locales finales du ou des filets des vis, diamétralement opposées auxdites régions locales initiales. Par ailleurs, d'une part la vis 1 et l'arbre 15 du montage décrit en référence à la figure 2 et d'autre part la vis 32 et l'arbre 49 du montage décrit en référence à la figure 4 peuvent être réalisés d'une seule pièce afin de supprimer leur liaison par exemple par cannelures et d'augmenter la résistance de l'ensemble aux efforts de transmission. Ainsi, le corps 2 de la vis 1 intègre l'arbre 15 et le corps 33 de la vis 32 intègre l'arbre 49. Dans ce cas, le procédé de fabrication par couches successives parallèles à l'axe des vis à obtenir est encore plus avantageux.

A titre d'exemple, les vis 1 et 32 peuvent être en acier, en alliage de type Nickel-Chrome ou en alliage d'aluminium.

## Revendications

1. Vis (1, 32) comprenant un corps longitudinal (2, 33) et, autour de ce corps longitudinal, au moins un filet (3, 34, 35) s'étendant sous la forme d'une hélice, **caractérisée par le fait qu'**elle est monobloc, le filet (3, 34, 35) comprenant, sur une partie de sa longueur, un cloisonnement intérieur (4, 38, 39) délimitant une pluralité de canaux intérieurs (5, 40, 41) qui s'étendent sous la forme d'hélices suivant la forme en hélice du filet, et **par le fait qu'**elle comprend des cavités collectrices (6, 7, 42, 43, 44, 45) dans lesquelles débouchent les extrémités desdits canaux intérieurs, lesdites cavités collectrices s'étendant radialement et débouchant dans un alésage longitudinal (8, 46) dudit corps (2, 33) en des endroits espacés longitudinalement.

2. Vis (1, 32) selon la revendication 1, dans laquelle le filet comprend une paroi extérieure (9, 36, 37) définissant sa surface extérieure, le cloisonnement intérieur (4, 38, 39) comprenant au moins une cloison intérieure (12), s'étendant depuis cette paroi extérieure.

3. Vis (1, 32) selon l'une quelconque des revendications précédentes, dans laquelle le cloisonnement intérieur comprend au moins une cloison s'étendant depuis ledit corps longitudinal (2, 33).

4. Vis (1, 32) selon l'une quelconque des revendications précédentes, dans laquelle le cloisonnement intérieur comprend une âme (11) et une pluralité de cloisons intérieures (12) qui rayonnent depuis cette âme, de façon à délimiter des canaux intérieurs situés autour de cette âme.

5. Vis (1, 32) selon l'une quelconque des revendications précédentes, dans laquelle le cloisonnement intérieur comprend des cloisons intérieures présentant des épaisseurs égales.

6. Vis (1, 32) selon la revendication 4, dans laquelle ladite paroi extérieure et ladite cloison intérieure présentent des épaisseurs égales.

7. Vis (1, 32) selon l'une quelconque des revendications précédentes, dans laquelle ledit corps longitudinal (2, 33) est pourvu d'un alésage longitudinal (8) dans lequel sont aménagées des cannelures (13).

8. Vis (1, 32) selon l'une quelconque des revendications 1 à 6, dans lequel ledit corps longitudinal (2, 33) comprend un arbre de transmission pourvu d'un alésage longitudinal (20, 50).

9. Vis (1, 32) selon l'une quelconque des revendications précédentes, dans laquelle la section cumulée desdits canaux intérieurs (5) est au moins égale à cinquante pour cent (50%) de la section totale dudit filet (3).

10. Procédé de fabrication d'une vis selon l'une quelconque des revendications 1 à 9, dans lequel cette vis est réalisée par fabrication additive par dépose et agglomération de couches de poudre successives perpendiculaires à l'axe d'une telle vis à fabriquer.

11. Procédé de fabrication d'une vis selon l'une quelconque des revendications 1 à 9, dans lequel cette vis est réalisée par fabrication additive par dépose et agglomération de couches de poudre successives et parallèles à l'axe d'une telle vis à fabriquer.

12. Assemblage comprenant une vis (1, 32) monobloc selon l'une quelconque des revendications 1 à 9, et comprenant en outre un arbre de montage et de transmission (15) engagé dans l'alésage de la vis (1, 32) et solidaire de cette dernière et pourvu d'un alésage longitudinal (20, 50).

13. Assemblage selon la revendication 12, dans lequel la paroi de l'arbre de montage et de transmission (15) présente des orifices radiaux (24, 30) communiquant avec lesdites cavités de la vis (1, 32).

## Patentansprüche

1. Schnecke (1, 32), umfassend einen Längskörper (2, 33) und um diesen Längskörper mindestens einen Gewindegang (3, 34, 35), der sich in der Form einer Spirale erstreckt, **dadurch gekennzeichnet, dass** sie einteilig ist, wobei der Gewindegang (3, 34, 35) an einem Teil seiner Länge eine innere Unterteilung (4, 38, 39) umfasst, die eine Vielzahl von inneren Kanälen (5, 40, 41) begrenzt, die sich spiralförmig gemäß der Spiralform des Gewindegangs erstrecken, und dass sie Sammelhohlräume (6, 7, 42, 43, 44, 45) umfasst, in die die Enden der inneren Kanäle münden, wobei sich die Sammelhohlräume radial erstrecken und an längsbeabstandeten Stellen in einer Längsbohrung (8, 46) des Körpers (2, 33) münden.

2. Schnecke (1, 32) nach Anspruch 1, wobei der Gewindegang eine Außenwand (9, 36, 37) umfasst, die seine Außenfläche definiert, wobei die innere Unterteilung (4, 38, 37) mindestens eine innere Trennwand (12) umfasst, die sich von dieser Außenwand erstreckt.

3. Schnecke (1, 32) nach einem der vorhergehenden Ansprüche, wobei die innere Unterteilung mindestens eine Trennwand umfasst, die sich von dem Längskörper (2, 33) erstreckt.

4. Schnecke (1, 32) nach einem der vorhergehenden Ansprüche, wobei die innere Unterteilung einen Kern (11) und eine Vielzahl von inneren Trennwänden (12) umfasst, die so von dem Kern abstrahlen, dass sie innere Kanäle, die um diesen Kern herum angeordnet sind, begrenzen.

5. Schnecke (1, 32) nach einem der vorhergehenden Ansprüche, wobei die innere Unterteilung innere Trennwände umfasst, die gleiche Dicken aufweisen.

6. Schnecke (1, 32) nach Anspruch 4, wobei die Außenwand und die innere Trennwand gleiche Dicken aufweisen.

7. Schnecke (1, 32) nach einem der vorhergehenden Ansprüche, wobei der Längskörper (2, 33) mit einer Längsbohrung (8) versehen ist, in der Keilzähne (13) ausgeführt sind.

8. Schnecke (1, 32) nach einem der Ansprüche 1 bis 6, wobei der Längskörper (2, 33) eine Übertragungswelle umfasst, die mit einer Längsbohrung (20, 50) versehen ist.

9. Schnecke (1, 32) nach einem der vorhergehenden Ansprüche, wobei der kombinierte Querschnitt der inneren Kanäle (5) mindestens gleich fünfzig Prozent (50%) des Gesamtquerschnitts des Gewindegangs (3) beträgt.

10. Verfahren zur Herstellung einer Schnecke nach einem der Ansprüche 1 bis 9, wobei diese Schraube mittels additiver Herstellung durch Ablagerung und Agglomeration von aufeinanderfolgenden, senkrecht zu der Achse einer solchen herzustellenden Schnecke verlaufenden Pulverschichten realisiert wird.

11. Verfahren zur Herstellung einer Schnecke nach einem der Ansprüche 1 bis 9, wobei diese Schraube mittels additiver Herstellung durch Ablagerung und Agglomeration von aufeinanderfolgenden, parallel zu der Achse einer solchen herzustellenden Schnecke verlaufenden Pulverschichten realisiert wird.

12. Anordnung, umfassend eine einteilige Schnecke (1, 32) nach einem der Ansprüche 1 bis 9 und ferner umfassend eine Steck- und Übertragungswelle (15), die in der Bohrung der Schnecke (1, 32) in Eingriff steht und mit jener fest verbunden ist und mit einer Längsbohrung (20, 50) versehen ist.

13. Anordnung nach Anspruch 12, wobei die Wand der Steck- und Übertragungswelle (15) radiale Öffnungen (24, 30) aufweist, die mit den Hohlräumen der Schnecke (1, 32) kommunizieren.

## Claims

1. Screw (1, 32) comprising a longitudinal body (2, 33) and, around this longitudinal body, at least one flight (3, 34, 35) extending in the form of a helix, **characterized in that** it is monobloc, the flight (3, 34, 35) comprising, over part of its length, an internal partitioning (4, 38, 39) delimiting a plurality of interior canals (5, 40, 41) that extend in the form of helices following the helix shape of the flight, and **in that** it comprises manifold-like cavities (6, 7, 42, 43, 44, 45) into which said interior canals open, said manifold-like cavities extending radially and opening into a longitudinal bore (8, 46) of said body (2, 33) at longitudinally spaced locations.

2. Screw (1, 32) according to claim 1, in which the flight comprises an exterior wall (9, 36, 37) defining its exterior surface, the interior partitioning (4, 38, 39) comprising at least one interior partition (12) extending from this exterior wall.

3. Screw (1, 32) according to any one of the preceding claims, in which the interior partitioning comprises at least one partition extending from said longitudinal body (2, 33).

4. Screw (1, 32) according to any one of the preceding claims, in which the interior partitioning comprises a core (11) and a plurality of interior partitions (12) that radiate from said core, so as to delimit interior canals situated around this core.

5. Screw (1, 32) according to any one of the preceding claims, in which the interior partitioning comprises interior partitions having equal thicknesses.

6. Screw (1, 32) according to claim 4, in which said exterior wall and said interior partition have equal thicknesses.

7. Screw (1, 32) according to any one of the preceding claims, in which said longitudinal body (2, 33) is provided with a longitudinal bore (8) in which splines (13) are created.

8. Screw (1, 32) according to any one of claims 1 to 6, in which said longitudinal body (2, 33) comprises a transmission shaft provided with a longitudinal bore (20, 50).

9. Screw (1, 32) according to any one of the preceding claims, in which the combined cross section of said interior canals (5) is at least equal to fifty percent (50%) of the total cross section of said flight (3).

10. Method for manufacturing a screw according to any one of claims 1 to 9, in which method this screw is created by additive manufacturing by deposition and agglomeration of successive layers of powder that are perpendicular to the axis of such a screw that is to be manufactured.

11. Method for manufacturing a screw according to any one of claims 1 to 9, in which method this screw is created by additive manufacturing by deposition and agglomeration of successive layers of powder that are parallel to the axis of such a screw that is to be manufactured.

12. Assembly comprising a monobloc screw (1, 32) according to any one of claims 1 to 9, and comprising a mounting and transmission shaft (15) engaged in the bore of the screw (1, 32) and integral with the latter and provided with a longitudinal bore (20, 50).

13. Assembly according to claim 12, wherein the wall of the mounting and transmission shaft (15) has radial orifices (24, 30) communicating with the cavities of the screw (1, 32).
